Europäisches Patentamt

European Patent Office

Office européen des brevets

(11) Veröffentlichungsnummer: **0 345 425**
**A2**

(12) **EUROPÄISCHE PATENTANMELDUNG**

(21) Anmeldenummer: **89105701.0**

(22) Anmeldetag: **31.03.89**

(51) Int. Cl.4: **G03B 27/62**

(30) Priorität: **09.06.88 DE 3819576**

(43) Veröffentlichungstag der Anmeldung:
**13.12.89 Patentblatt 89/50**

(84) Benannte Vertragsstaaten:
**AT CH ES FR GB IT LI NL SE**

(71) Anmelder: **HERRMANN & KRAEMER GMBH & CO. KG**
**Zur Maximilianshöhe 8**
**D-8100 Garmisch-Partenkirchen(DE)**

(72) Erfinder: **Hertlein, Ernst**
**Zur Maximilianshöhe 6**
**D-8100 Garmisch-Partenkirchen(DE)**
Erfinder: **Herrmann, Anselm**
**Törlenstrasse 2**
**D-8100 Garmisch-Partenkirchen(DE)**

(74) Vertreter: **Huss, Carl-Hans, Dipl.-Ing.**
**Patentanwalt Griesstrasse 3 a Postfach 14 54**
**D-8100 Garmisch-Partenkirchen(DE)**

(54) **Gerät für die Mikrofotografie gebundener Schriftwerke mit einer kippbaren Buchschwinge.**

(57) Bei dem Abfotografieren gebundener Schriftwerke, insbesondere bei der Mikrofotografie wertvoller alter Bücher, treten viele Schwierigkeiten auf, die sich teils aus der notwendigen Vermeidung jeder überbeanspruchung des zu fotografierenden Buches, insbesondere der Buchrücken, teils daraus ergeben, daß auch die bei aufeinanderfolgenden aneinanderstoßenden Buchseiten innen liegenden Bereiche noch klar und verzerrungsfrei erfaßt werden müssen. Hierzu schlägt die Erfindung ein einfach aufgebautes und einfach zu bedienendes Gerät vor, bei dem eine um mindestens 90° kippbare Buchschwinge (1) vorgesehen ist, deren zueinander senkrecht stehende Stützwände (4,5) die Buchdeckel stützen und einen Arbeitsraum (6) zweiseitig abgrenzen, wobei die Buchschwinge (1) auf einer heb- und senkbaren Traverse (21) ruht und mit der Oberseite einer Stützwand (4 oder 5) gegen die Unterfläche einer waagrecht in den Arbeitsraum verschiebbaren Glasplatte (29,29') anpressbar ist.

FIG. 2

# Gerät für die Mikrofotografie gebundener Schriftwerke mit einer kippbaren Buchschwinge

Die Erfindung richtet sich auf ein Gerät für das Fotografieren gebundener Schriftwerke, wobei der Begriff "Schriftwerke" im weitesten Sinn zu verstehen ist und nicht nur Schrift, sondern auch bildliche und fotografische Darstellungen, Zeichnungen, Pläne, Tabellen, Formeln und dergleichen enthaltende Werke umfaßt.

Neben z.B. der Herstellung von Reprints oder Faksimiliausgaben ist ein wichtiges Anwendungsgebiet für das Gerät nach der Erfindung die Mikrofotografie derartig gebundener Schriftwerke, für die ein zunehmendes Bedürfnis besteht und anhand derselben sie nachfolgend beschrieben wird. Sie ist insbesondere für die Mikrofotografie alter und wertvoller Bücher wichtig, weil viele von ihnen aufgrund der Papierqualität mit der Zeit selbst dann zerfallen, wenn sie entsprechend geschützt und vorsichtig verwahrt werden. Zwar läßt sich in vielen Fällen der Zerfall durch eine moderne Konservierung verhindern oder zumindest lange aufhalten, aber die Zahl auch solcher wertvoller Bücher ist so groß, daß es völlig unmöglich ist, sie alle entsprechend zu konservieren. Um dann wenigstens Inhalt und Darstellung sowie Aufmachung derselben für die Nachwelt zu erhalten, hat sich eine Archivierung auf Mikrofilm bewährt. Die Mikroverfilmung dient aber nicht nur der Archivierung, sondern natürlich auch dazu, den Inhalt derart wertvoller Bücher Wissenschaftlern, Studenten, Lehrern und sonstigen interessierten Personen zugänglich zu machen.

Die Mikroverfilmung gebundener Schriftwerke, insbesondere alter Bücher, ist aus mehreren Gründen schwierig, wobei man sich zu vergegenwärtigen hat, daß die Anforderungen an originalgetreue Wiedergabe in der Regel sehr hoch gestellt werden.

. Die einfachste Art der Mikroverfilmung ist die, jeweils zwei aufeinanderfolgende, im Buch nebeneinanderliegende Seiten, d.h. im aufgeschlagenen Buch immer zwei nebeneinanderliegende Seiten, gleichzeitig zu fotografieren. Aber dies ist in vielen Fällen nicht möglich. Es ist, wie man schon vom Fotokopieren eines Buches auf der Glasplatte her weiß, immer schwierig, bei einem aufgeschlagenen, innen über dem Rücken eine lippenförmige Wulst bildenden Schriftwerk die inneren Bereiche, insbesondere aneinanderstoßende innere Endbereiche der Seiten, scharf und verzerrungsfrei fotografiert zu erhalten und diese Schwierigkeit nimmt in dem Maße zu, in dem der eine Seitenstapel wenige und der andere Seitenstapel viele Seiten des Buches umfaßt. Wenn man z.B. in einem 500 Seiten umfassenden Buch die Seiten 10 und 11 gleichzeitig abfotografieren will, so befinden sich unterhalb der Ablichtebene in dem einen linken Seitenstapel (abgesehen von nicht numerierten Vorblättern) der Buchdeckel und 5 Blatt und im anderen Seitenstapel rechts der Mittellinie des aufgeschlagenen Buches 245 Blatt und der Buchdeckel. Eine waagerecht liegende Fotografierebene läßt sich damit nur erreichen, wenn man die Seite des Buches mit dem Stapel geringer Höhe gegenüber der Seite mit dem Stapel größerer Höhe besonders abstützt und durch diese Abstützung einen laufend zu verändernden Höhenausgleich schafft. Das ist umständlich und kompliziert.

Die vorstehend geschilderte Schwierigkeit wird gerade bei vielen alten und damit wertvollen Büchern dadurch erhöht, daß man früher aus ökonomischen Gründen häufig jedes Blatt so weit wie möglich ausnutzte, und d.h. den Schrifttext und bildliche Darstellungen so weit wie möglich bis an die Ränder setzte. Das bedeutet, daß dort, wo zwei Seiten innen aufeinanderstoßen und eine verzerrungsfreie Wiedergabe schon bei neueren, dort keinen Text und keine bildliche Darstellungen aufweisenden Schriftwerken besonders schwierig bis unmöglich ist, bei alten Büchern auch noch Text und Darstellungen erfaßt werden müssen.

Eine weitere Schwierigkeit bei der Mikrofotografie nach der geschilderten Art ergibt sich daraus, daß der Buchrücken dabei stark beansprucht wird, der insbesondere bei alten Büchern dieser Beanspruchung häufig nicht widersteht. In solchen Fällen ist man gezwungen, Seite für Seite einzeln zu fotografieren. Das Buch wird dabei rechtwinklig aufgeklappt benutzt und der jeweils waagerecht liegende Stapel unter eine Glasplatte geführt, während der senkrecht stehende Stapel mit der Hand gehalten werden muß, was bei umfangreichen Folianten eine schwere körperliche Arbeit ist. Außerdem ergibt sich aus dieser Aufnahmeweise eine Verdrehung jeder zweiten aufgenommenen Seite um 180° auf dem Mikrofilm, was die Lesbarkeit sehr erschwert.

Aus der US-PS 1,175,221 ist ein Halter für das Abfotografieren gebundener Schriftwerke bekannt, der aus zwei zueinander senkrecht stehenden Stützplatten besteht, die einen Arbeitsraum zweiseitig abgrenzen, in den das zu fotografierende Buch gelegt werden kann. Obwohl die beiden Stützplatten mit einem Scharnier am Gestell angelenkt sind, ist dieser Halter nur in sehr begrenztem Umfang kippbar, und es sind sogar am Gestell besondere Anschlagbretter vorgesehen, die ein Kippen von mehr als 45° verhindern sollen. Ferner ist aus der EP 0 149 897 A2 ein Fotokopierer mit einer Buchstütze bekannt, die auf einer heb- und senkbaren Traverse ruht und mit der Oberseite einer Stützwand gegen die Unterfläche einer im Arbeitsraum befindlichen Glasplatte anpreßbar ist. Bei diesem Gerät ist aber die aus den beiden senkrecht oder etwa senkrecht zueinander stehenden Platten bestehende Buchstütze nur um eine senkrechte Achse drehbar, so daß zwar nacheinander erst die Oberseite des gegen eine Platte anliegenden Blattstapels des Buches fotografiert werden kann und dann nach Drehung um 180° die oberste Seite des gegen die andere Platte anliegenden Blattstapels, jedoch ergibt sich auch hier eine Verdrehung jeder zweiten fotokopierten Seite um 180°, was eine Mikroverfilmung praktisch unmöglich macht.

Es war demnach Aufgabe der Erfindung, ein Gerät für das Fotografieren gebundener Schriftwerke, insbesondere besonders sorgsam zu behandelnder Bücher zu schaffen, das mit einfachen Mitteln das unkomplizierte Abfotografieren jeweils einer Seite ohne Beanspruchung des Buches, insbesondere des Buchrückens so erlaubt, daß auch die inneren Bereiche so erfaßt werden können, daß sie einwandfrei wiedergegeben werden. Diese Aufgabe löst die Erfindung mit den in den Ansprüchen angegebenen Mitteln.

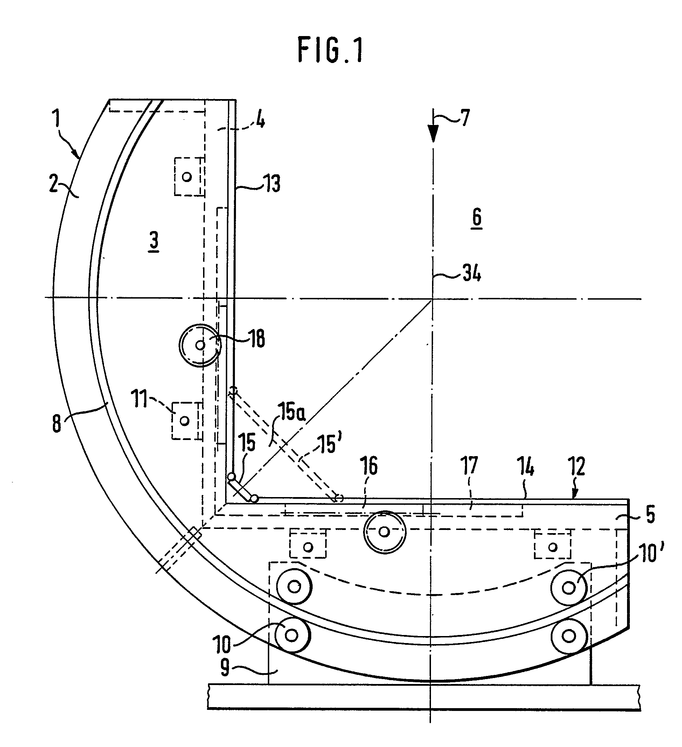

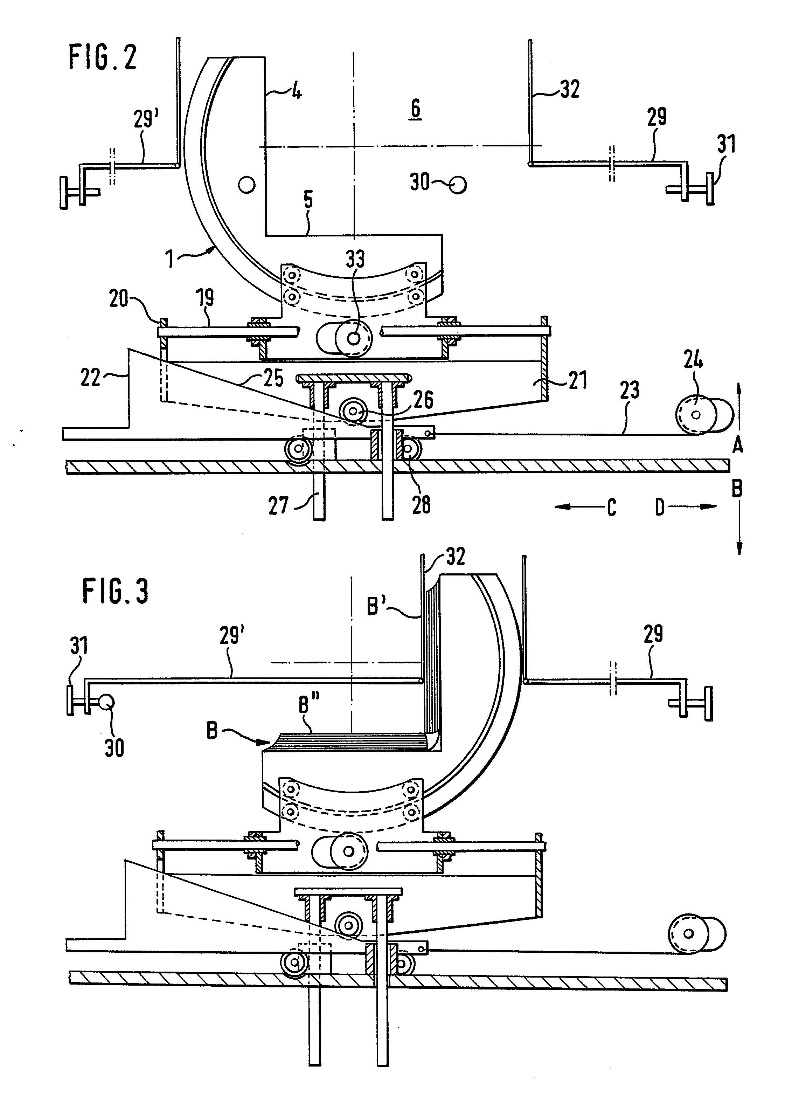

Die Erfindung ist an einem, keinen Anspruch auf Vollständigkeit erhebenden Ausführungsbeispiel anhand der Zeichnung nachfolgend beschrieben, die in der Fig. 1 einen Hauptteil eines Gerätes nach der Erfindung schematisch und vereinfacht in verkleinertem Maßstab in der Seitenansicht und Fig. 2 wesentliche Teile des Gerätes im Vertikalschnitt in einem gegenüber Fig. 1 weiter verkleinertem Maßstab und Fig. 3 den Gegenstand der Fig. 2 mit einer in die entgegengesetzte Arbeitslage verschobenen Buchschwinge darstellt.

In Fig. 1 ist allgemein mit 1 eine Buchschwinge bezeichnet, die aus zwei im Abstand liegenden Reifenstücken 2, einer Vorder- und einer Rückwand 3 und dem Reifen 2 und Wänden 3 verbindenden Stützwänden 4 und 5 zusammengesetzt ist. Die Stützwände 4 und 5 liegen rechtwinklig zueinander und begrenzen zweiseitig einen Arbeitsraum 6, oberhalb dessen die nur durch einen Pfeil 7 angedeutete Kamera angeordnet ist.

Jedes Reifenstück weist einen Flansch 8 auf, der zwischen leicht gängigen, in Lagerplatten 9 gelagerten Rollenpaaren 10,10' die Buchschwinge 1 stützt und hält und es gestattet, sie motorisch leicht gängig in die dargestellte Lage oder in die Lage nach Fig. 3 zu kippen, in der die Stützwand 5 senkrecht steht und die Stützwand 4 waagerecht liegt.

11 sind Klötze, mit denen die Wände 3 mit den Wänden 4 und 5 verschraubt sind.

Für die Anlage gegen die den Arbeitsraum 6 auf rechtwinklig zueinanderstehenden Seiten begrenzenden Außenflächen der Stützwände 4 und 5 kann eine allgemein mit 12 bezeichnete Buchstütze vorgesehen sein, die aus Deckelplatten 13 und 14 und der sie über Scharniere verbindenden Rückenplatte 15 besteht. Dabei ist die Scharnieran ordnung und -gestaltung so getroffen, daß die Rückenplatte in Anpassung an unterschiedlich starke Buchrücken leicht auswechselbar ist, was durch die strichpunktiert angedeutete, gegenüber der Rückenplatte 15 breitere Rückenplatte 15' veranschaulicht ist.

Die Deckelplatten 13 und 14 weisen auf ihrer, den durch sie gestützten Buchdeckeln abgewandten Seite, zweckmäßig in ihrer Mittelebene, je ein Zahnstangenstück 16 auf, das in einem Schlitz oder in einer Nut 17 der Stützwand 4 bzw. 5 verschoben werden kann und mit einem von außen über eine Handhabe 18 betätigten, nicht sichtbaren Zahnrad kämmt. Damit kann bei eingelegtem und rechtwinklig aufgeschlagenem Buch jede Deckelplatte für sich auf der sie stützenden Stützwand verschoben werden, wodurch in Anpassung an unterschiedliche Dicken der Blattstapel und damit unterschiedlicher Schrägen der Buchrücken verschiedene Schräglagen der Rückenplatte 15 einstellbar sind (Fig. 3).

Wenn auf eine besondere Buchstütze 12 verzichtet werden soll oder für stark abweichende Formate, können Keile, z.B. Holz- oder Kunststoffkeile, verschiedener, den Räumen 15a hinter dem Buchrücken angepaßten Größe mit verschiedenen Schrägen der dem Buchrücken zugewandten Fläche parat gehalten werden.

Wie Fig. 2 veranschaulicht, ist die Buchschwinge 1 auf Stangen 19 leichtgängig waagerecht verschiebbar gelagert. Bei dem dargestellten Beispiel sind die Stangen in Seitenwänden 20 einer Traverse 21 gelagert.

Die Traverse 21 ist in Pfeilrichtung A anhebbar und in Pfeilrichtung B absenkbar. Hierfür ist bei dem dargestellten Ausführungsbeispiel ein Zugkeil 22 vorgesehen, der durch einen Seilzug 23 mit motorisch angetriebenem Seilrad 24 in Pfeilrichtung C-D verschiebbar ist. Auf der Keilfläche 25 kann sich ein an der Traverse gelagertes Rad 26 abrollen, d.h. durch Zug des Keils in Pfeilrichtung D wird die Traverse 21 angehoben, während sie durch Zug in Pfeilrichtung C (z.B. durch eine Rückholfeder) abgesenkt wird. 27 sind in Buchsen 28 geführte, die vertikale Verschiebung der Traverse gewährleistende und ein Kippen verhindernde Führungsstangen. Die vertikale Bewegung der Traverse kann auch auf andere Weise, z.B. hydraulisch oder pneumatisch bewerkstelligt werden.

Zu dem Gerät nach der Erfindung gehören ferner zwei in den Fig. 2 und 3 nur schematisch angedeutete, auf beliebige geeignete Weise gehaltene und in Pfeilrichtung C-D verschiebbare Glasplatten 29 und 29', gegen deren Unterseite die zu fotografierende Buchseite, in Fig. 3 die Buchseite B″, des Buches B, mit dem für die Einebnung derselben notwendigen Druck angelegt wird. 30 sind Festanschläge und 31 verstellbare Anschlagschrauben an den Glasplatten. 32 sind zweckmäßig leicht federnde oder federnd angebrachte Haltezungen oder -bleche, die am jeweils senkrecht stehenden Seitenstapel B′ ein Hineinfallen der Blätter dieses Stapels in den Arbeitsraum 6 verhindern.

Mit 33 ist der die Schwinge 1 verschwenkende Motor mit Getriebe angedeutet.

Die Arbeitsweise des erfindungsgemäßen Geräts ist wie folgt:

Zunächst wird eine Glasplatte, z.B. gemäß Fig. 3 die Glasplatte 29′, mit Hilfe des Festanschlags 30 und der Anschlagschraube 31 entsprechend der Breite des bearbeiteten Buches bzw. der abzufotografierenden Seiten eines Blattstapels B″ zur Objektivachse 34 des Apparats 7 zentriert und danach in gleicher Weise nach gekippter Schwinge (Fig. 2) die Glasplatte 29 auf den anderen Stapel. Die Fotografierstellungen der Glasplatten werden nun während des Abfotografierens eines Schriftwerks bzw. der aus diesem abzufotografierenden Seiten nicht mehr verändert.

Danach wird die freie Glasplatte, z.B. gemäß Fig. 2 die Glasplatte 29, in die Fotografierstellung und dann die Schwinge von der Seite her in Richtung auf die Glasplatte 29 (Pfeilrichtung D) gefahren, bis die Innenkante der Glasplatte und mit dieser die Haltezunge 32 lose an der obersten Seite des senkrechten Stapels anliegt. Dies geschieht motorisch, z.B. über einen beide Glasplatten in entgegengesetzten Richtungen verschiebenden Zahnriemen. Unterschiede in der Dicke des jeweils senkrechten Stapels werden durch eine feinfühlige Rutschkupplung ausgeglichen. Dann wird die Traverse 21 mit Schwinge 1 mittels des Keils 22 und seinem Seilzug 23 in Pfeilrichtung A bis zur Anlage der zu fotografierenden Seite an der Unterfläche der Glasplatte hochgefahren und die Seite fotografiert. Nachdem danach die Traverse in Pfeilrichtung B wieder heruntergefahren und die Glasplatte 29 in Pfeilrichtung D zurückgefahren wurde sowie die Schwinge in die entgegengesetzte Lage verschwenkt wurde, wird die Buchseite mit der Hand umgeblättert und der Vorgang wiederholt sich mit der anderen Glasplatte 29′.

Auf diese Weise kann die jeweilige Glasplatte immer bis an den äußersten inneren Rand einer Buchseite zur Anlage an die zu fotografierende Seite gebracht werden, ohne daß der empfindliche Buchrücken beansprucht würde. Außerdem stehen bei dieser Aufnahmeweise immer alle Buchseiten richtig, d.h. van einer Seite aus lesbar auf dem Film.

## Bezugszeichenaufstellung

1 Buchschwinge (allgemein)
2 Reifenstücke
3 Vorderwand, Rückwand
4 Stützwand
5 Stützwand
6 Arbeitsraum
7 Kamera
8 Flansch
9 Lagerplatten
10 Rollenpaare
11 Klötze
12 Buchstütze (allgemein)
13 Deckelplatte
14 Deckelplatte
15 Rückenplatte
15′ Rückenplatte
15a Raum hinter dem Buchrücken
16 Zahnstangenstück
17 Nut
18 Handhabe
19 Stangen
20 Seitenwände
21 Traverse
22 Zugkeil
23 Seilzug
24 Seilrad
25 Keilfläche
26 Rad
27 Führungsstangen
28 Buchsen
29 Glasplatte
29′ Glasplatte
30 Festanschläge
31 Anschlagschrauben
32 Haltezungen oder -bleche
33 Motor
34 Objektivachse

## Ansprüche

1. Gerät für das Fotografieren gebundener Schriftwerke mit einer um mindestens 90° kippbaren Buchschwinge (1), deren zueinander senkrecht stehende Stützwände (4,5) die Buchdeckel stützen und einen Arbeitsraum (6) zweiseitig abgrenzen, welche Buchschwinge auf einer heb- und senkbaren Traverse (21) ruht und mit der Oberseite einer Stützwand (4,5) gegen die Unterfläche einer waagerecht in den Arbeitsraum verschiebbaren Glasplatte (29,29′) anpressbar ist.

2. Gerät nach dem Anspruch 1, dadurch gekennzeichnet, daß die Buchschwinge (1) aus zwei im Abstand liegenden, etwa 150° einnehmenden Reifenstücken (2), einer einen rechtwinkligen Ausschnitt bildenden Vorderwand (3) und entsprechenden Rückwand sowie zwei rechtwinklig zueinander stehenden und die Schwinge zum Arbeitsraum (6) hin schließenden Stützwänden (4,5) zusammengesetzt ist.

3. Gerät nach dem Anspruch 2, dadurch **gekennzeichnet,** daß jedes Reifenstück einen Flansch (8) aufweist, der zwischen an der Traverse (21) gelagerten Rollenpaaren (10,10') gehalten ist.

4. Gerät nach dem Anspruch 1, dadurch **gekennzeichnet,** daß die Buchschwinge (1) waagerecht verschiebbar gelagert ist.

5. Gerät nach den Ansprüchen 3 und 4, dadurch **gekennzeichnet,** daß die Rollenpaare (10,10') in Lagerplatten (9) gelagert sind, die auf in Seitenwänden (20) der Traverse (21) gelagerten Stangen (19) waagerecht verschiebbar sind.

6. Gerät nach dem Anspruch 1, dadurch **gekennzeichnet,** daß für das abzufotografierende Buch (B) eine Buchstütze (12) vorgesehen ist, die aus einer gegen die Stützwand (4) anliegenden Deckelplatte (13) und einer gegen die Stützwand (5) anliegenden Deckelplatte (14) sowie einer, diese über Scharniere verbindenden, auswechselbaren Rückenplatte (15,15') zusammengesetzt ist.

7. Gerät nach dem Anspruch 6, dadurch **gekennzeichnet,** daß an der Rückseite der Deckelplatten (13,14) je ein Zahnstangenstück (16) angebracht ist, das in einem Schlitz oder einer Nut (17) der Stützwand (4,5) verschiebbar ist und mit einem Zahnrad kämmt, das mittels einer Handhabe (18) gedreht werden kann.

8. Gerät nach dem Anspruch 1, dadurch **gekennzeichnet,** daß für das Anheben und Absenken der Traverse (21) ein Zugkeil (22) vorgesehen ist, der mittels eines Antriebsmittels waagerecht verschiebbar ist und daß an der Traverse (21) ein Rad (26) gelagert ist, das sich auf der Keilfläche (25) abrollt.

9. Gerät nach dem Anspruch 1, **gekennzeichnet** durch senkrecht zu den Glasplatten (29,29') stehende, an ihren Innenkanten angeordnete Haltezungen oder -bleche (32).

10. Gerät nach dem Anspruch 1, dadurch **gekennzeichnet,** daß das Antriebsmittel für den Zugkeil (22) ein Seilzug (23) ist.

EP 0 345 425 A2

# FIG.1

FIG.2

FIG.3